# EUROPEAN PATENT APPLICATION

(11) **EP 4 600 316 A1**
(43) Date of publication of application: **13.08.2025**
(21) Application number: 23874519.4
(22) Date of filing: 07.08.2023
(51) Int. Cl.: C09D 11/101, B41M 1/30, C08F 290/06

(54) **ACTIVE ENERGY RAY-CURABLE INK COMPOSITION FOR SURFACE PRINTING**

(30) Priority: 05.10.2022 JP 2022160987
(71) Applicant: Sakata INX Corporation, Osaka-shi, Osaka 550-0002 (JP)
(72) Inventor: OMI, Naoki, Osaka-shi, Osaka 550-0002 (JP); ESAKI, Aika, Osaka-shi, Osaka 550-0002 (JP); ITO, Aoi, Osaka-shi, Osaka 550-0002 (JP)
(74) Representative: Müller-Boré & Partner Patentanwälte PartG mbB
(86) International application number: PCT/JP2023/028678
(87) International publication number: WO 2024/075386

(57) **Abstract**

It is an object to obtain printed portions which have sufficiently high adhesion and good scratch resistance both before and after retort processing, in which the ink or varnish on the printed surfaces of the retort bags resists delamination, in which the ink on the printed surfaces does not transfer to other surfaces due to high-temperature heating during heat sealing, and in which the bags obtained in the manner described above have good bending durability. A solution to the problems provided is an active energy ray-curable surface printing ink composition containing the following component (A), component (B), and component (C) and satisfying the following condition (1) and condition (2) .
Component (A) an ethoxylated polyfunctional monomer with a number of moles of ethylene oxide added of 6 to 60,
Component (B) a compound having an unmodified polydimethylsiloxane skeleton,
Component (C) an active energy ray-curable oligomer and/or an active energy ray-curable polymer,
Condition (1) the content of a monomer other than the component (A) in the active energy ray-curable surface printing ink composition is 15.0% by mass or less, and
Condition (2) the content of the component (B) in the active energy ray-curable surface printing ink composition is 0.2% by mass or more and 10.0% by mass or less.

## Description

### Technical Field

The present invention relates to an active energy ray-curable surface printing ink composition.

### Background Art

With the aim of preserving the global environment, activities to reduce environmental impact are being conducted in various industries and fields, and activities to promote environmental impact reduction are being conducted from various perspectives. For example, volatile organic compounds (VOCs) contained in paints, inks, etc. are known as chemical substances that cause global warming, and therefore there are activities to reduce the environmental impact by voluntarily regulating and reducing the use of VOCs.

From the viewpoint of reducing VOCs, it has been considered to utilize active energy ray-curable printing ink compositions that cure under active energy rays such as UV rays and electron beams. The active energy ray-curable printing ink composition contains a polymerizable compound that polymerizes when irradiated with active energy rays, a polymerization initiator that exhibits the function of initiating polymerization when irradiated with active energy rays, etc.

With the active energy ray-curable composition, the amount of VOCs used can be reduced, and, in turn, the amount of VOCs volatilized into the atmosphere can be zero or reduced, so that the environmental impact can be reduced. Moreover, the active energy ray-curable composition cures rapidly (has quick drying properties), and this allows energy saving and improved productivity. Therefore, the active energy ray-curable composition has been practically used as paints and printing ink compositions.

One known electron beam-curable surface printing water-based flexographic ink composition contains a water-based resin and an electron beam-polymerizable compound having an ethylenic double bond at a specific ratio and further contains a pigment and water, as shown in PTL 1. It is stated that, when the electron beam-curable surface printing water-based flexographic ink composition is used to print on retort containers, the following effects are obtained. The ink composition adheres well to a base material and has wear resistance, and the printed material does not change even after boiled at 98°C and also does not change after retort sterilization treatment.

PTL 2 describes a printed material obtained by printing an electron beam-curable printing ink composition for retort packaging films on the surface of a film having specific surface protrusions at a specific density and having a specific surface area increase ratio.

### Citation List

### Patent Literature

PTL 1: International Publication No. WO2019/069736
PTL 2: Japanese Unexamined Patent Application Publication No. 2021-126896

### Summary of Invention

### Technical Problem

Thick PE bags (including milky polyethylene bags) are often used for agricultural fertilizer packaging bags, livestock feed packaging bags, and medical infusion bags. Inks used for printing are often applied to the front side of these packaging films. Although conventional solvent-based gravure inks, UV inks, water-based flexographic inks, etc. have the required performance, their environmental friendliness, safety, and coating durability are not always superior.

Examples of the problems with solvent-based gravure printing include residual VOCs from the solvents, the printing environment due to VOCs, and an increase in production energy consumption due to a heat drying method. Fertilizer bags are often stored outdoors, exposed to sunlight, and subjected to loads, so that they require high coating durability. Due to the recent tightening of regulations on the use of photopolymerization initiators for UV inks, initiators usable for the inks are limited. Moreover, each time a new restriction is imposed on initiators, the inks need to be modified, and a certification test for the modification is required.

In terms of stable ink supply in the future, it is not clear whether there will be a trend toward more stringent regulations on initiators. Water-based flexographic inks have problems such as production energy consumption due to the heat drying method, and the adhesion of these inks to thick PE is poor, so that the inks are susceptible to delamination. As these inks are water-based inks, one problem with these inks is that their low retorting resistance makes the inks difficult to use when, for example, the contents of infusion bags are subjected to sterilization treatment (retorting treatment). The present invention aims to solve these problems.

Moreover, to print an electron beam-curable printing ink composition for retort packaging films on the surface of a film having specific protrusions thereon at a specific density and having a specific surface area increase ratio, it is necessary to prepare a printing base material subjected to specific treatment, and no consideration is given to the heat resistance of the printing ink composition itself during heat sealing.

It is an object to obtain printed portions which have sufficiently high adhesion and good scratch resistance both before and after retort processing, in which the ink or varnish on the printed surfaces of the retort bags resists delamination, in which the ink on the printed surfaces does not transfer to other surfaces due to high-temperature heating during heat sealing, and in which the bags obtained in the manner described above have good bending durability.

### Solution to Problem

The present inventors have found that the foregoing problems can be solved by using the following active energy ray-curable surface printing ink composition and thus arrived at the following invention.
[1] An active energy ray-curable surface printing ink composition containing the following component (A), component (B), and component (C) and satisfying the following condition (1) and condition (2):
   component (A): an ethoxylated polyfunctional monomer with an addition number of moles of ethylene oxide of 6 to 60;
   component (B): a compound having a polydimethylsiloxane skeleton;
   component (C): an active energy ray-curable oligomer and/or an active energy ray-curable polymer;
   condition (1): a content of a monomer other than the component (A) in the active energy ray-curable surface printing ink composition is 15.0% by mass or less; and
   condition (2): a content of the component (B) in the active energy ray-curable surface printing ink composition is 0.2% by mass or more and 10.0% by mass or less.
[2] The active energy ray-curable surface printing ink composition according to [1], wherein the component (B) does not have a hydroxy group, an amino group, a (poly)ether group, an epoxy group, a carboxy group, a carbinol group, a mercapto group, a phenol group, an ester group, an alkoxy group, a halogenated aralkyl group, an aralkyl group, a long-chain alkyl group, higher fatty acid ester modified, and a higher aliphatic amido group.
[3] The active energy ray-curable surface printing ink composition according to [1] or [2], wherein the component (B) has a viscosity of 20 to 2000 cSt.
[4] The active energy ray-curable surface printing ink composition according to any of [1] to [3], further containing a pigment and a pigment dispersant.

### Advantageous Effects of Invention

According to the present invention, both printed portions on bags to be subjected to retort processing and printed portions on retort bags subjected to retort processing can have sufficiently high adhesion and scratch resistance. The ink or varnish on the printed surfaces of the retort bags does not delaminate, and the ink on the printed surfaces does not transfer to other surfaces due to high-temperature heat during heat sealing. An additional effect is that the bags obtained in the manner described above have good bending durability.

### Description of Embodiments

The active energy ray-curable surface printing ink composition of the invention is used for the same applications as those of conventional printed materials.

Like general printing inks, the active energy ray-curable surface printing ink composition of the invention may contain a resin component, a pigment, and an additive and may optionally contain a solvent etc. The active energy ray-curable surface printing ink composition of the invention may be a coloring ink composition or may be used as a clear ink composition.

The active energy ray-curable surface printing ink composition of the invention is a printing ink applicable to any printing method and can be used for a well-known printing method such as a flexographic, gravure, inkjet, or offset printing method using an ink composition that cures when irradiated with energy rays. When used as a clear ink composition, the ink composition can be used for full-surface printing using a bar coater, a roll coater, etc. or can be used for any printing medium with no restrictions. However, it is preferable to use the ink composition as a surface printing ink for retort packaging containers.

The term "solids content" means the content of all components including components that are not solids before curing but cure when irradiated with active energy rays and components that are solids or dissolved solids even before curing.

The "active energy rays" in the invention mean energy rays such as electron beams or UV rays that act directly or indirectly on polymerizable functional groups such as acryloyl groups to initiate polymerization.

Each of the components used in the invention may be a biomass-derived raw material, if possible.

In the present description, "(meth)acrylate" means "acrylate and/or methacrylate," and "(meth)acrylic acid" means "acrylic acid and/or methacrylic acid."

In the present description, the glass transition temperature Tg of a resin is its theoretical glass transition temperature determined from the following Wood's equation when the resin is an acrylic-based copolymer resin. 1/Tg = W1/Tg1 + W2/Tg2 + W3/Tg3 +...+ Wx/Tgx [In this equation, Tg1 to Tgx are the glass transition temperatures of homopolymers of monomers 1, 2, 3,..., x forming the resin, and W1 to Wx are polymerization fractions of the monomers 1, 2, 3,..., x. Tg represents the theoretical glass transition temperature. Note that the glass transition temperatures in the Wood's equation are absolute temperatures.]

In the present description, the weight average molecular weight of a resin can be measured by gel permeation chromatography (GPC). For example, the chromatography is performed using Waters 2690 (Waters) as the GPC apparatus, PLgel 5 µ MIXED-D (Polymer Laboratories) as the column, and tetrahydrofuran as the eluent under the conditions of a column temperature of 25°C, a flow rate of 1 mL/minute, an RI detector, a sample injection concentration of 10 mg/mL, and an injection amount of 100 µL to thereby determine a polystyrene-equivalent weight average molecular weight.

The glass transition temperature of a resin other than an acrylic-based copolymer resin is a theoretical glass transition temperature determined by thermal analysis. The thermal analysis is performed by a method according to JIS K7121 (Testing methods for transition temperatures of plastics), and the glass transition temperature can be measured using, for example, Pyris 1 DSC available from PerkinElmer Co., Ltd. under the conditions of a heating rate of 20°C/minute and a nitrogen gas flow rate of 20 mL/minute.

### <Component (A)>

The component (A) in the invention is an ethoxylated polyfunctional monomer with an addition number of moles of ethylene oxide of 6 to 60.

The ethoxylated polyfunctional monomer with an addition number of moles of ethylene oxide of 6 to 60 in the invention is a monomer having, in its molecule, 6 to 60 moles of an ethylene oxide (EO) unit derived from ethylene glycol and having a plurality of addition polymerizable functional groups such as ethylenically unsaturated double bonds.

The content of the component (A) with respect to the total mass of the active energy ray-curable surface printing ink composition is preferably 3.0% by mass or more, more preferably 8.0% by mass or more, and still more preferably 15.0% by mass or more and is preferably 60.0% by mass or less, more preferably 50.0% by mass or less, and still more preferably 40.0% by mass or less. In the present invention, the component (A) contained can provide the following effects. The adhesion to a base material is good, and scratch resistance and adhesion both before and after retorting are good. Heat resistance during heat sealing is good, and the bending durability of products is good. Moreover, the ink or varnish after printing does not delaminate.

The ethylenically unsaturated double bonds etc. may be double bonds derived from (meth)acryloyl groups or may be vinyl bonds.

The monomer may have, in addition to the ethylene oxide, a structure including a bisphenol compound such as bisphenol A, a structure derived from a dihydric alcohol such as propylene glycol, butylene glycol, pentyl glycol, or hexylene glycol, or a structure derived from a trihydric or higher polyhydric alcohol such as glycerin, trimethylolpropane, or pentaerythritol.

Examples of the monomer for the component (A) include: polyethylene glycol (6 to 60 moles) di(meth)acrylates such as polyethylene glycol (300) di(meth)acrylate, polyethylene glycol (400) di(meth)acrylate, and polyethylene glycol (600)di(meth)acrylate; 6 to 60 mole ethoxylated trimethylolpropane tri(meth)acrylates such as 6 mole ethoxylated trimethylolpropane tri(meth)acrylate, 9 mole ethoxylated trimethylolpropane tri(meth)acrylate, 15 mole ethoxylated trimethylolpropane tri(meth)acrylate, and 21 mole ethoxylated trimethylolpropane tri(meth)acrylate; 6 to 60 mole ethoxylated ditrimethylolpropane tri(meth)acrylates; 6 to 60 mole ethoxylated glycerin tri(meth)acrylates such as 6 mole ethoxylated glycerin tri(meth)acrylate, 9 mole ethoxylated glycerin tri(meth)acrylate, 15 mole ethoxylated glycerin tri(meth)acrylate, and 21 mole ethoxylated glycerin tri(meth)acrylate; 6 to 60 mole ethoxylated diglycerin tri(meth)acrylates; 6 to 60 mole ethoxylated pentaerythritol tri(meth)acrylates; 6 to 60 mole ethoxylated pentaerythritol tetra(meth)acrylates; 6 to 60 mole ethoxylated dipentaerythritol tetra(meth)acrylates; and bisphenol A (6 to 60 moles) di(meth)acrylates.

### <Component (B)>

A compound having a polydimethylsiloxane skeleton that is the component (B) used in the invention may be modified or unmodified but is preferably unmodified.

The unmodified dimethylpolysiloxane has a structure including polymerized dimethylsiloxane units. This unmodified dimethylpolysiloxane has a structure represented by a formula shown below. In the formula below, the molecular weight varies according to the value of n. However, when the structure has no functional groups, it can be used in the invention irrespective of the value of n.

The structure may be linear as shown by the formula below, and n in the formula below is preferably 3 to 30 and more preferably 4 to 20.

When the compound having the polydimethylsiloxane skeleton in the active energy ray-curable surface printing ink composition of the invention receives active energy rays such as UV rays or an electron beam, its reactivity increases, and this allows molecules of the compound having the polydimethylsiloxane skeleton to react with each other and/or the compound having the polydimethylsiloxane skeleton to react with the component (A), the component (C), and other components. Since the above reactions occur, the composition of the invention that satisfy the other requirements can exhibit the prescribed effects in a balanced manner.

The compound having the polydimethylsiloxane skeleton may be a cyclic dimethylpolysiloxane such as octamethylcyclotetrasiloxane, decamethylcyclopentasiloxane, or dodecamethylcyclohexasiloxane.

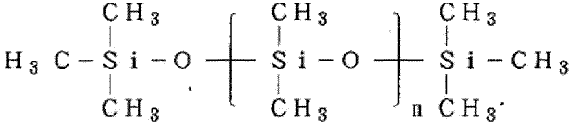

Examples of the modified polydimethylsiloxane include modified polydimethylsiloxanes having structures substituted with a hydroxy group, an amino group, a (poly)ether group, an epoxy group, a carboxy group, a carbinol group, a mercapto group, a phenol group, an ester group, an alkoxy group, a halogenated aralkyl group, an aralkyl group, a long-chain alkyl group, higher fatty acid ester modified, a higher aliphatic amido group, etc.

The viscosity of the component (B) at 25°C is preferably 20 to 2000 cSt, more preferably 50 cSt or more, and still more preferably 80 cSt or more. The viscosity is more preferably 1000 cSt or less and still more preferably 300 cSt or less. The viscosity as used herein is a kinematic viscosity and is measured under the conditions of JIS Z 8803:2011.

If the component (B) is the same as the component (A) or the component (C), the common component is not considered to be contained in the component (B) but is considered to be contained in the component (A) or the component (C).

### <Condition 2>

The content of the compound having the polydimethylsiloxane skeleton that is the component (B) in the active energy ray-curable surface printing ink composition is 0.2% by mass or more and 10.0% by mass or less.

In the present invention, the content of the compound having the polydimethylsiloxane skeleton with respect to the total mass of the active energy ray-curable surface printing ink composition is 0.2% by mass or more, preferably 0.5% by mass or more, and more preferably 0.8% by mass or more. The content is preferably 7.0% by mass or less, more preferably 6.0% by mass or less, and more preferably 4.0% by mass or less.

If the content is less than 0.2% by mass, the ink composition does not have the intended characteristics of the invention. If the content is 10.0% by mass or more, the transferability of the active energy ray-curable surface printing ink composition tends to deteriorate, and this causes the ink composition to be difficult to apply.

### <Component (C)>

The component (C) in the invention is an active energy ray-curable oligomer and/or an active energy ray-curable polymer other than the component (A).

The component (C) in the invention is a component whose molecular weight increases when ethylenically unsaturated bonds in molecules are polymerized. The component (C) has a relatively high molecular weight in itself and is used also for the purpose of imparting appropriate viscosity and elasticity to the ink composition. The polarity of the oligomer is relatively high, and it can be expected to obtain the effect of imparting adhesion to a non-absorptive medium to the cured ink composition.

The examples of component (C) include the following polyester(meth)acrylate oligomer and polymer, the following polyurethane (meth)acrylate oligomer and polymer, and/or the following epoxy (meth)acrylate oligomer and polymer, provided that they are not included in the component (A). These oligomers and polymers may be modified with a hydroxy group, an amino group, a carboxyl group, etc.

### (Polyurethane (meth)acrylate oligomer and polymer)

No particular limitation is imposed on the polyurethane (meth)acrylate oligomer and polymer, so long as they are an oligomer and polymer in which a (meth)acryloyl group is bonded to a hydroxy group at at least one terminal end of a polyester resin structure obtained from a polybasic acid and a polyol.

### (Polyurethane (meth)acrylate oligomer and polymer)

No particular limitation is imposed on the polyurethane (meth)acrylate oligomer and polymer, so long as they are an oligomer and polymer having a (meth)acryloyl group at at least one terminal end of a condensation product having a polyurethane resin structure.

Preferably, these active energy ray-curable polymers have two or more and six or less (meth)acryloyl groups per molecule.

### (Epoxy (meth)acrylate oligomer and polymer)

No particular limitation is imposed on the epoxy (meth)acrylate oligomer and polymer, so long as they are an oligomer and polymer having a structure in which a (meth)acryloyl group is bonded to a hydroxy group formed as a result of ring opening of an epoxy group contained in an epoxy compound by acid or base.

Other examples include polyether-modified (meth)acrylate having a structure in which a (meth)acryloyl group is bonded to a terminal hydroxy group of a polyether compound and rosin-modified epoxy (meth)acrylate.

Examples of the oligomer and polymer having ethylenically unsaturated bonds include polydiallyl phthalate, neopentyl glycol oligo(meth)acrylate, 1,4-butanediol oligo(meth)acrylate, 1,6-hexanediol oligo(meth)acrylate, trimethylolpropane oligo(meth)acrylate, pentaerythritol oligo(meth)acrylate, urethane (meth)acrylate, epoxy (meth)acrylate, polyester (meth)acrylate, epoxy (meth)acrylate, rosin-modified epoxy (meth) acrylate, unsaturated polyester, polyether (meth) acrylate, acrylic resins with unreacted unsaturated groups, unsaturated polyether, unsaturated polyamide, unsaturated polyurethane, acrylic-modified phenolic resins, and oligomers and polymers of acrylated amine compounds.

These oligomers are commercially available. Commercially available examples of the oligomers include: the "Ebecryl" series available from Daicel Cytec Co. Ltd.; the water-soluble "CN" series and "SR" series available from Sartomer such as CN549, CN131, CN131B, CN2285, CN3100, CN3105, CN132, CN133, and CN132; Ebecryl 140, Ebecryl 1140, Ebecryl 40, Ebecryl 3200, Ebecryl 3201, and Ebecryl 3212 (Cytec); the "PHOTOMER" series available from Cognis such as PHOTOMER 3660, PHOTOMER 5006F, PHOTOMER 5429, and PHOTOMER 5429F; the "LAROMER" series available from BASF such as LAROMER PO 33F, LAROMER PO 43F, LAROMER PO 94F, LAROMER UO 35D, LAROMER PA 9039V, LAROMER PO 9026V, LAROMER 8996, LAROMER 8765, and LAROMER 8986; the "ARONIX M-6000" series, "7000" series, "8000" series, "ARONIX M-1100," "ARONIX M-1200," and "ARONIX M-1600" available from TOAGOSEI Co., Ltd.; the "NK ester" and "NK oligo" available from Shin Nakamura Chemical Co., Ltd.; the "Light Acrylate," "Light Ester," "Epoxy Ether," "Urethane Acrylate," and "High-functionality oligomer" series available from Kyoeisha Yushi Kagaku Kogyo Co., Ltd.; the "Special Acrylic Monomer" series available from OSAKA ORGANIC CHEMICAL INDUSTRY LTD.; "ACRYESTER" and "Diabeam oligomer" series available from MITSUBISHI RAYON Co., Ltd.; the "KAYARAD" series and "KAYAMER" series available from Nippon Kayaku Co., Ltd.; the "(Meth)acrylic Acid/Methacrylic Acid Ester Monomer" series available from NIPPON SHOKUBAI Co., Ltd.; the "NICHIGO-UV SHIKOH urethane acrylate oligomer" series available from The Nippon Synthetic Chemical Industry Co., Ltd.; the "carboxylic acid vinyl ester monomer" series available from Shin-Etsu Vinyl Acetate Co., Ltd.; the "functional monomer" series available from Kohjin Co., Ltd.; the "EBECRYL," "ACA," "KRM," "IRR," "RDX," and "OTA" series available from DAICEL-ALLNEX LTD.; the "CN" and "SR" series available from ARKEMA; the "ART RESIN" series available from Negami Chemical Industrial Co., Ltd.; the "BLEMMER" series available from NOF CORPORATION; the "NEW FRONTIER" series available from DAI-ICHI KOGYO SEIYAKU Co., Ltd.; the "Miramer" series available from MIWON; and the "AgiSyn" series available from DSM.

As raw materials of the oligomers and/or polymers, polyurethane oligomers and/or polyurethane polyurea oligomers prepared using, as raw materials, polyester polyols obtained using dicarboxylic acid components and diol components derived from plants may be used in consideration of environmental aspects. No limitation is imposed on the plant oil-modified polyester acrylate oligomers, so long as they are plant oil-modified polyester acrylate oligomers having 2 to 6 acrylate groups in their molecule.

In particular, when, for example, one or more types selected from the group consisting of EBECRYL 450, 452, 820, and 1622 and tall oil fatty acid-modified hexafunctional polyester acrylates (such as AgiSyn 716) are used, the biomass degree of the active energy ray-curable surface printing ink composition can be increased, which is preferred.

One of these oligomers may be used alone, or two or more types may be used in combination.

The weight average molecular weight of the active energy ray-curable oligomer and/or polymer is preferably 1,000 or more, more preferably 1,500 or more, and still more preferably 1,800 or more. The weight average molecular weight is preferably 20,000 or less, more preferably 15,000 or less, still more preferably 10,000 or less, and most preferably 7,000 or less.

The acid value of the active energy ray-curable oligomer and/or polymer is preferably 0 mg KOH/g, more preferably 5.0 mg KOH/g or less, still more preferably 18.0 mg KOH/g or less, and most preferably 30.0 mg KOH/g or less.

The glass transition temperature (Tg) of the cured product of the active energy ray-curable oligomer and/or polymer alone is preferably 10°C or higher, more preferably 20°C or higher, and still more preferably 40°C or higher. The glass transition temperature (Tg) is preferably 80°C or lower, more preferably 70°C or lower, still more preferably 65°C or lower, and most preferably 60°C or lower.

The component (C) has a high molecular weight even before irradiation with active energy rays and is therefore a component that helps to improve the viscoelasticity of the ink composition. The oligomer and/or polymer is used, for example, as a low-viscosity liquid monomer or a solution or dispersion in a solvent.

In the present invention, the content of the active energy ray-curable oligomer and/or polymer with respect to the total mass of the active energy ray-curable surface printing ink composition is preferably 10.0% by mass or more, more preferably 20.0% by mass or more, still more preferably 30.0% by mass or more, and most preferably 35.0% by mass or more. The content is preferably 70.0% by mass or less, more preferably 60.0% by mass or less, and still more preferably 55.0% by mass or less.

### <Component not included in components (A), (B), and (C)>

As a component not included in the components (A), (B), and (C), any of the following various monomers and active energy ray-curable resins such as the following oligomers (which are not monomers and are different from the component (A)) may be used.

### (Monomer other than component (A))

A monomer other than the component (A) is a component that has an ethylenically unsaturated bond and that undergoes polymerization to cause an increase in molecular weight and is often a relatively low-molecular weight liquid component before polymerization. The monomer other than the component (A) is used as a solvent used to dissolve a resin component to separately prepare a varnish or is used for the purpose of adjusting the viscosity of the ink composition.

The monomer other than the component (A) can be contained in the active energy ray-curable surface printing ink composition of the invention such that the following condition 1 is satisfied.

### <Condition 1>

The content of the monomer other than the component (A) in the active energy ray-curable surface printing ink composition is 15.0% by mass or less.

In the present invention, the content of the monomer other than the component (A) in the active energy ray-curable surface printing ink composition is preferably 10.0% by mass or less, more preferably 8.0% by mass or less, still more preferably 3.0% by mass or less, and most preferably 0% by mass. If the content exceeds 15.0% by mass, the intended characteristics of the ink composition of the invention

### cannot be obtained.

The monomer other than the component (A) is a monofunctional monomer having one ethylenically unsaturated bond in its molecule or a bifunctional or higher functional monomer having two or more ethylenically unsaturated bonds in its molecule. The bifunctional or higher functional monomer can cross-link molecules when the ink composition cures and therefore contributes to an increase in curing rate and the formation of a firm coating film. The monofunctional monomer does not have the cross-linking ability described above but contributes to a reduction in cure shrinkage due to cross-linking. A combination of different monomers selected appropriately may be used.

Examples of the monofunctional monomer that can be used include unsaturated carbolic acid-based compounds, alkyl (meth)acrylate-based compounds, hydroxyl group-containing (meth)acrylate-based compounds, halogen-containing (meth)acrylate-based compounds, ether group-containing (meth)acrylate-based compounds, carboxyl group-containing (meth)acrylate-based compounds, vinyl ether group-containing (meth)acrylate-based compounds, other (meth)acrylate-based compounds, styrene-based compounds, N-vinyl-based compounds, allylate-based compounds, and other compounds having one ethylenically unsaturated bond.

### - Unsaturated carbolic acid-based compound -

Examples of the unsaturated carbolic acid-based compound include unsaturated carbolic acids such as (meth)acrylic acid, itaconic acid, crotonic acid, isocrotonic acid, fumaric acid, and maleic acid, salts thereof, and anhydrides thereof.

### - Alkyl (meth)acrylate-based compound -

Examples of the alkyl (meth)acrylates include methyl (meth)acrylate, ethyl (meth)acrylate, propyl (meth)acrylate, isopropyl (meth)acrylate, n-butyl (meth)acrylate, i-butyl (meth)acrylate, t-butyl acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acrylate, dicyclopentenyl (meth)acrylate, dicyclopentenyloxyethyl (meth)acrylate, 1-adamantyl (meth)acrylate, 3,5,5-trimethylcyclohexyl acrylate, 4-t-butylcyclohexyl (meth)acrylate, and benzyl (meth)acrylate.

### - Hydroxyl group-containing (meth)acrylate-based compound -

Examples of the hydroxyl group-containing (meth)acrylate-based compound include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-hydroxy-3-allyloxypropyl (meth)acrylate, 2-(meth)acryloyloxyethyl-2-hydroxypropyl phthalate, (poly)alkylene glycol-modified (meth)acrylates such as 2-ethylhexyl EO-modified (meth)acrylate, o-phenylphenol EO-modified acrylate, p-cumylphenol EO-modified (meth)acrylate, and nonylphenol EO-modified (meth)acrylate, N-(2-hydroxyethyl)acrylamide (abbreviation: HEAA), N-(2-hydroxyethyl)methacrylamide, N-(2-hydroxymethyl)acrylamide, and N-(2-hydroxymethyl)methacrylamide.

### - Halogen-containing (meth)acrylate-based compound -

Examples of the halogen-containing (meth)acrylate-based compound include trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, and 2,4,6-tribromophenol 3EO (ethylene oxide) adduct (meth)acrylate.

### - Ether group-containing (meth)acrylate-based compound -

Examples of the ether group-containing (meth)acrylate-based compound include: 1,3-butylene glycol methyl ether (meth)acrylate; methoxypolyethylene glycol (meth)acrylates such as methoxydiethylene glycol (meth)acrylate and methoxytriethylene glycol (meth)acrylate; and alkoxy-based and phenoxy-based (meth)acrylates such as methoxypropylene glycol (meth)acrylate, methoxydipropylene glycol (meth)acrylate, methoxytripropylene glycol (meth)acrylate, methoxypolypropylene glycol (meth)acrylate, ethoxydiethylene glycol (meth)acrylate, ethyl carbitol (meth)acrylate, 2-ethylhexyl carbitol (meth)acrylate, tetrahydrofurfuryl (meth)acrylate, cresyl polyethylene glycol (meth)acrylate, 2-(vinyloxyethoxy)ethyl (meth)acrylate, phenoxyethyl (meth)acrylate, p-nonylphenoxyethyl (meth)acrylate, p-nonylphenoxy polyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxypolyethylene glycol (meth)acrylate (the number of EO repeating units: 400, 700, etc.), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl acrylate, ethoxyethoxyethyl (meth)acrylate, butoxyethyl (meth)acrylate, alkoxylated 2-phenoxyethyl (meth)acrylates (such as ethoxylated 2-phenoxyethyl (meth)acrylate and propoxylated 2-phenoxyethyl (meth)acrylate), alkoxylated nonylphenyl (meth)acrylates (such as ethoxylated (4) nonylphenol acrylate), 2-phenoxyethyl (meth)acrylate, p-cumyl phenoxyethylene glycol (meth)acrylate, methylphenoxyethyl acrylate, ethoxylated succinic acid (meth)acrylate, ethoxylated tribromophenyl acrylate, and ethoxylated nonylphenyl (meth)acrylate.

### - Carboxyl group-containing (meth)acrylate-based compound -

Examples of the carboxyl group-containing (meth)acrylate-based compound include β-carboxyethyl (meth)acrylate, monoacryloyloxyethyl succinate, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, and 2-(meth)acryloyloxypropyl tetrahydrohydrogen phthalate.

### - Vinyl ether group-containing (meth)acrylate-based compound

Examples of the vinyl ether group-containing (meth)acrylate-based compound include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, and 2-(vinyloxyisopropoxyisopropoxy)ethyl (meth)acrylate.

### - Other (meth)acrylate-based compounds -

Examples of the other (meth)acrylate-based compounds include acryloylmorpholine, methylolacrylamide, dimethylacrylamide, methoxymethylacrylamide, diethylacrylamide, isopropylacrylamide, N,N-dimethylaminoethyl (meth)acrylate, N,N-dimethylaminopropyl (meth)acrylate, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-1-(meth)acryloxy-3-methacryloxypropane, acryloxyethyl phthalate, 2-(meth)acryloyloxyethyl-2-hydroxyethyl phthalate, 2-(meth)acryloyloxypropyl phthalate, tricyclodecanemonomethylol (meth)acrylate, (meth)acrylic acid dimer, diethylaminoethyl (meth)acrylate, 2-(meth)acryloyloxyethyl succinic acid, 2-(meth)acryloyloxyethyl hexahydrophthalic acid, 2-ethylhexyl-diglycol (meth)acrylate, aminoethyl (meth)acrylate, ethylcarbitol acrylate, ethyldiglycol acrylate, dimethylaminoethyl acrylate benzyl chloride quaternary salt, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylate benzoate, (2-methyl-2-ethyl-1,3-dioxolan-4-yl)methyl (meth)acrylate, 1-(meth)acryloyl piperidin-2-one, 1,4-dioxaspiro[4,5]dec-2-ylmethyl 2-(meth)acrylate, N-(meth)acryloyloxyethylhexahydrophthalimide, γ-butyrolactone (meth)acrylate, caprolactone-modified tetrahydrofurfuryl acrylate, imide acrylate, vinyl (meth)acrylate, and maleimide.

### - Styrene-based compound -

Examples of the styrene-based compound include styrene, vinyltoluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, and divinylbenzene.

### - N-vinyl-based compound -

Examples of the N-vinyl-based compound include N-vinylpyrrolidone, N-vinylformamide, N-vinylacetamide, N-vinyl-2-caprolactam, and N-vinylcarbazole.

### - Allylate-based compound -

Examples of the allylate-based compound include allyl glycidyl ether, diallyl phthalate, triallyl trimellitate, and isocyanuric acid triallyl ester.

### - Other compounds having one ethylenically unsaturated bond

"Other compounds having one ethylenically unsaturated bond" that differ from the compounds described above may be used as compounds having one ethylenically unsaturated bond.

Examples of such compounds include vinyl acetate, vinyl monochloroacetate, vinyl benzoate, vinyl pivalate, vinyl butyrate, vinyl laurate, divinyl adipate, vinyl crotonate, vinyl 2-ethylhexanoate, three-membered ring compounds (such as vinylcyclopropanes, 1-phenyl-2-vinylcyclopropanes, 2-phenyl-3-vinyloxiranes, and 2,3-divinyloxiranes), and cyclic ketene acetals (such as 2-methylene-1,3-dioxepane, polydioxolans, 2-methylene-4-phenyl-1,3-dioxepane, 4,7-dimethyl-2-methylene-1,3-dioxepane, and 5,6-benzo-2-methylene-1,3-dioxepane) .

The bifunctional or higher functional monomer (the compound having two ethylenically unsaturated bonds) used may be any of the following well-known compounds having two or more ethylenically unsaturated bonds.

Examples thereof include bifunctional monomers such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentane di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate, tricyclodecanedimethylol di(meth)acrylate, tricyclodecanedimethylol dicaprolactonate di(meth)acrylate, cyclohexanedimethanol di(meth)acrylate, dicyclopentanyl di(meth)acrylate, tetraethoxylated bisphenol-A di(meth)acrylate, tetraethoxylated bisphenol-F di(meth)acrylate, tetraethoxylated bisphenol-S di(meth)acrylate, tetraethoxylated hydrogenated bisphenol A di(meth)acrylate, tetraethoxylated hydrogenated bisphenol F di(meth)acrylate, hydrogenated bisphenol A di(meth)acrylate, hydrogenated bisphenol F di(meth)acrylate, tetraethoxylated bisphenol A dicaprolactonate di(meth)acrylate, tetraethoxylated bisphenol F dicaprolactonate di(meth)acrylate, and di(meth)acrylates of polyhydric alcohols such as glycerin, pentaerythritol, diglycerin, ditrimethylolpropane, and dipentaerythritol.

Other examples include: trifunctional monomers such as glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and tetrafunctional and higher functional monomers such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate. Of these, trimethylolpropane triacrylate (TMPTA: trifunctional), ditrimethylolpropane tetraacrylate (DITMPTA: tetrafunctional), dipentaerythritol hexaacrylate (DPHA: hexafunctional), glycerinpropoxy triacrylate (GPTA: trifunctional), hexanediol diacrylate (HDDA: bifunctional), etc. are preferred.

### [Photopolymerization initiator]

The photopolymerization initiator is a component that generates radicals upon irradiation with active energy rays, and the radicals generated allow the compounds having ethylenically unsaturated bonds to polymerize to thereby cure the ink composition. The ink composition of the invention contains the photopolymerization initiator and other components and can be cured when irradiated with UV rays. Even when no photopolymerization initiator is contained, the ink composition can be cured by irradiation with an electron beam.

However, when the photopolymerization initiator is contained, no particular limitation is imposed on the photopolymerization initiator so long as it is, for example, any of the following compounds that generate radical upon irradiation with active energy rays.

The photopolymerization initiator is one or more types selected from the group consisting of acylphosphine oxide-based compounds, triazine-based compounds, aromatic ketone-based compounds, aromatic onium salt-based compounds, organic peroxides, thioxanthone-based compounds, thiophenyl-based compounds, anthracene-based compounds, hexaarylbiimidazole-based compounds, ketoxime ester-based compounds, borate-based compounds, azinium-based compounds, metallocene-based compounds, active ester-based compounds, halogenated hydrocarbon-based compounds, alkylamine-based compounds, iodonium salt-based compounds, and sulfonium salt-based compounds.

Specific examples of the photopolymerization initiator include benzophenone, diethylthioxanthone, 2-methyl-1-(4-methylthio)phenyl-2-morpholinopropan-1-one, 4-benzoyl-4'-methyldiphenyl sulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenylphosphine oxide, and 2-benzyl-2-dimethylamino-1-(morpholinophenyl)-butan-1-one. These photopolymerization initiators are commercially available. For example, products with trade names such as Irgacure 907, Irgacure 369, Irgacure 184, Irgacure 379, Irgacure 819, and TPO are available from BASF, and products with trade names such as DETX are available from Lamberti. Any one of these photopolymerization initiators may be used alone, or a combination of two or more types may be used.

### (Sensitizer)

The active energy ray-curable composition of the invention may contain a sensitizer. When the active energy ray-curable composition can cure sufficiently, it is not always necessary to use a sensitizer.

The sensitizer is preferably an anthracene-based sensitizer. Two or more sensitizers may be used in combination. Specific examples of the sensitizer include anthracene-based sensitizers such as 9,10-dibutoxyanthracene, 9,10-diethoxyanthracene, 9,10-dipropoxyanthracene, and 9,10-bis(2-ethylhexyloxy)anthracene. Representative examples of the commercial product of the anthracene-based sensitizer include DBA and DEA (manufactured by Kawasaki Kasei Chemicals Ltd.).

### [Coloring component]

A coloring component may be optionally added to the ink composition of the invention. The coloring component is a component added to impart coloring power, hiding power, etc. to the ink composition, and examples include coloring pigments, white pigments, and metal powders. The coloring component used can be freely selected from, for example, the following organic and/or inorganic pigments conventionally used for ink compositions.

When the active energy ray-curable surface printing ink composition of the invention is a clear ink, the ink composition may contain no coloring component. Even when a coloring component is contained, its content is adjusted to be small enough so that portions printed with the active energy ray-curable surface printing ink composition have no hiding power.

Examples of the coloring component include: dye lake pigments; azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, anthraquinone-based, flavanthrone-based, quinophthalone-based, pyranthrone-based, and indanthrone-based pigments; and various inorganic pigments.

Examples of these pigments include: yellow pigments such as Disazo Yellows (Pigment Yellow 12, Pigment Yellow 13, Pigment Yellow 14, Pigment Yellow 17, and Pigment Yellow 1) and Hansa Yellows; magenta pigments such as Brilliant Carmine 6B, Lake Red C, and watching red; cyan pigments such as phthalocyanine blue, phthalocyanine green, and alkali blue; color pigments (including achromatic pigments such as white and black pigments) such as titanium oxide, red iron oxide, antimony red, cadmium yellow, cobalt blue, iron blue, ultramarine blue, iron black, chrome oxide green, carbon black, and graphite; and metal powders such as aluminum paste and bronze powder.

No particular limitation is imposed on the content of the coloring component with respect to the total mass of the ink composition, but the content is, for example, about 5 to about 40% by mass and is selected according to the intended degree of coloring. When a colored ink composition is prepared, a coloring component of a different color may also be used as a complementary color component, or an ink composition of a different color may also be used.

### [Pigment dispersant / pigment dispersing resin]

When the active energy ray-curable surface printing ink composition of the invention uses a pigment as the coloring agent, a pigment dispersant and/or a pigment dispersing resin may be added.

The pigment dispersant used may be one or more types selected from the group consisting of well-known nonionic surfactants, anionic surfactants, cationic surfactants, and amphoteric surfactants.

The surfactant used may be, for example, one or more types selected from the group consisting of silicon-based surfactants (such as polyether-modified silicon oils, polyester-modified polydimethylsiloxanes, and polyester-modified methyl alkyl polysiloxanes), fluorine-based surfactants, oxyalkylene ether-based surfactants, acetylene glycol-based surfactants, phosphorus-based surfactants, and sulfonic acid-based surfactants.

The pigment dispersing resin used may be one or more types selected from the group consisting of polymeric dispersants (such as carbodiimide-based, polyester-based, polyamine-based, polyester amine-based, polyurethane-based, and fatty acid amine-based dispersants, and polyacrylate-based, polycaprolactone-based, polysiloxane-based, multichain-type polymeric nonionic, and polymeric ionic dispersants).

When the active energy ray-curable surface printing ink composition of the invention contains the pigment dispersant or the pigment dispersing resin, its amount is preferably 1 to 200% by mass based on 100% by mass of the total mass of the pigments used.

### [Other components]

The active energy ray-curable surface printing ink composition of the invention may optionally contain other components in addition to the components described above. It is not always necessary to contain these components. Components necessary for the printing or application method used may be added. Examples of these components include an extender, a non-curable resin component, a polymerization inhibitor, a dispersant, phosphoric acid salts and other salts, PTFE, waxes such as polyethylene-based waxes, olefine-based waxes, and Fischer-Tropsch waxes, an antifoaming agent, alcohols, and oil components such as plant oils and mineral oils. It may be unnecessary to contain acid catalysts.

The extender is a component for imparting appropriate characteristics such as printability and viscoelasticity to the ink composition of the invention. In particular, any of various extenders generally used for preparation of ink compositions can be used. Examples of the extender include clay, kaolinite (kaolin), barium sulfate, magnesium sulfate, calcium carbonate, silicon oxide (silica), bentonite, talc, mica, and titanium oxide. No particular limitation is imposed on the amount of the extender added with respect to the total mass of the ink composition, but the amount is, for example, preferably about 0 to about 33% by mass.

The non-curable resin component is a component that contributes to imparting appropriate characteristics such as printability and viscoelasticity to the active energy ray-curable surface printing ink composition of the invention and does not have an unsaturated bond that contributes to polymerization. Examples of such a resin component include various resins conventionally used for printing ink composition applications. In the present invention, the non-curable resin component may or may not be contained.

When the non-curable resin component is contained, it is preferable that the resin component is compatible with the above-described monomers and oligomers. The non-curable resin component used may be one or more types selected from the group consisting of styrene-acrylic resins, acrylic resins, styrene-maleic acid resins, polyester resins, alkyd resins, rosin-modified phenolic resins, rosin-modified maleic acid resins, rosin-modified alkyd resins, rosin-modified petroleum resins, rosin ester resins, phenolic resins, rosin resins, block polymers, graft polymers (core-shell polymers), acrylic-modified phenolic resins, petroleum resin-modified phenolic resins, plant oil-modified alkyd resins, fatty acid-modified rosin resins, petroleum resin-modified phenolic resins, terpene phenol resins, petroleum resins, hydrocarbon resins (such as polybutene and polybutadiene), and fluorocarbon resins (such as tetrafluoroethylene (PTFE) resin wax). In particular, rosin-modified maleic acid resins and terpene phenol resins are preferred in terms of adhesion.

The styrene-acrylic resin is a copolymer of styrene and an acrylate, and any of various commercial products may be used. When the styrene-acrylic resin is used, it is convenient to dissolve the solid styrene-acrylic resin in any of the above-described monomers to prepare a varnish and add the varnish when the ink composition is prepared. In this case, the content of the styrene-acrylic resin in the varnish may be appropriately determined in consideration of handleability. The content is, for example, about 5 to about 50% by mass.

Particularly preferably, the styrene-acrylic resin used may be one or more types selected from the group consisting of acrylic-based resins (such as acrylate-styrene copolymer-based resins), styrene-based resins (such as styrene-acrylate copolymer-based resins), rosin-modified phenol-based resins, rosin-modified maleic acid-based resins, rosin-modified alkyd-based resins, rosin ester-based resins, fatty acid-modified rosin-based resins, alkyd-based resins, and plant oil-modified alkyd-based resins.

Preferably, the resin has a weight average molecular weight of 500 to 300,000. The acid value of the resin is preferably 1 to 100 mg KOH/g in terms of the quick drying property when the resin is irradiated with active energy rays etc.

The content of the resin is preferably 30% by mass or less, more preferably 20% by mass or less, and still more preferably 10% by mass or less, with respect to the solids content of the active energy ray-curable surface printing ink composition. The addition of the resin is preferred because appropriate viscoelasticity can be imparted to the ink composition to prevent the occurrence of misting etc. without reducing good curability under the application of active energy rays. In the active energy ray-curable surface printing ink composition of the invention, when the resin used is a fatty acid-modified rosin-based resin or a rosin-modified alkyd resin, the characteristics such as the biomass degree can be improved.

The active energy ray-curable surface printing ink composition may contain a well-known polymerization inhibitor for the purpose of preventing polymerization during storage. Preferred examples of the polymerization inhibitor include phenol compounds such as butylhydroxytoluene, tocopherol acetate, nitrosamine, benzotriazole, and hindered amine. Of these, butylhydroxytoluene is particularly preferred. By adding such a polymerization inhibitor, an increase in the viscosity of the ink composition that can occur due to the progress of the polymerization reaction during storage can be prevented. The content of the polymerization inhibitor in the ink composition is, for example, about 0.1 to about 1% by mass.

However, when the active energy ray-curable surface printing ink composition does not contain a conventional polymerization initiator, it is not always necessary to contain the polymerization inhibitor.

The dispersant is used to ensure good dispersion of the coloring component and extender contained in the ink composition. The dispersant used may be any of various commercial dispersants, and examples thereof include the DISPERBYK (product name) series available from BYK-Chemie Japan.

To produce the ink composition of the invention using the components described above, any well-known method may be used. One example of such a method includes: mixing the components described above; kneading the mixture using a bead mill, a triple roll mill, etc. to disperse the pigments (i.e., the coloring component and the extender); adding optional additives (such as a polymerization inhibitor, alcohol, and wax); and adding the above-described monomer component or oil component to adjust the viscosity.

### [Wax]

The wax used may be a wax conventionally used for printing inks and having an average particle diameter of 8.0 µm or less for the purpose of improving scratch resistance.

Specific examples of the wax include: animal and plant-based waxes such as beeswax, lanoline wax, spermaceti, candelilla wax, carnauba wax, rice wax, Japan wax, and jojoba oil; mineral and petroleum-based waxes such as montan wax, ozokerite, ceresin, paraffin wax, microcrystalline wax, and petrolatum; synthetic hydrocarbon-based waxes such as Fischer-Tropsch wax, polyethylene wax, oxidized polyethylene wax, and oxidized polypropylene wax; modified waxes such as montan wax derivatives, paraffin wax derivatives, and microcrystalline wax derivatives; hydrogenated waxes such as hydrogenated castor oil and hydrogenated castor oil derivatives; and polytetrafluoroethylene wax. The average particle diameter of the wax is preferably 8.0 µm or less, more preferably 6.0 µm or less, still more preferably 4.0 µm or less, and most preferably 1.0 to 2.0 µm in terms of scratch resistance.

Of these, polytetrafluoroethylene wax and polyethylene wax are favorable in terms of frictionality.

The average particle diameter of the wax used is appropriately selected according to, for example, the viscosity of the active energy ray-curable surface printing ink composition.

The content of the wax in the active energy ray-curable surface printing ink composition is preferably in the range of 1.0 to 5.0% by mass.

If the content of the wax is less than 1.0% by mass, the scratch resistance tends to deteriorate. If the content of the wax is more than 5.0% by mass, the transferability of the ink tends to deteriorate.

### [Solvent]

The active energy ray-curable surface printing ink composition may contain a well-known solvent for the purpose of, for example, lowering the viscosity and improving spreadability on a base material. The ink composition may be solvent-free.

Examples of the solvent include water, glycol monoacetates, glycol diacetates, glycol ethers, and lactates. Of these, water, tetraethylene glycol dialkyl ether, ethylene glycol monobutyl ether acetate, and diethyl diglycol are preferred.

When the active energy ray-curable surface printing ink composition contains the solvent, its content may be 0 to 50.0% by mass.

### [Surface conditioner]

The active energy ray-curable surface printing ink composition of the invention may contain a well-known surface conditioner.

The surface conditioner used may be, for example, one or more types selected from the group consisting of silicon-based surface conditioners, fluorine-based surface conditioners, acrylic-based surface conditioners, acetylene glycol-based surface conditioners, etc.

Specifically, the surface conditioner used may be, for example, one or more types selected from the group consisting of the BYK series available from BYK-Chemie, the TEGO series available from Evonik Degussa Japan Co., Ltd., and the POLYFLOW series available from KYOEISHA CHEMICAL Co., Ltd.

When the active energy ray-curable surface printing ink composition contains the surface conditioner, its content may be 0.01 to 1.0% by mass.

### [Base material for printing]

Preferably, the active energy ray-curable surface printing ink composition of the invention is used for surface printing on films for retort packages. However, the ink composition can be used for surface printing on base materials for other applications.

The base material used for printing or applying the active energy ray-curable surface printing ink composition of the invention is a resin, paper, etc. and may be a composite base material such as a laminate formed from a plurality of base materials. The base material used for retort packages can be selected from resins suitable for the retort package application. As a base material used for applications that differ from the retort package application and do not require heat sealing and retort processing, paper, as well as resin, can be used as described above.

As for the surface properties of a base material formed of a resin, 40 or more protrusions with a height of 15 nm or more may or may not be provided in a 10 µm × 10 µm area.

A plastic base material used for printing or applying the active energy ray-curable surface printing ink composition is, for example, one or more types selected from the group consisting of polyester-based polymers (such as polyethylene terephthalate (PET) and polyethylene naphthalate), cellulose-based polymers (such as diacetylcellulose and triacetylcellulose (TAC)), polycarbonate-based polymers, polyacrylic-based polymers (such as polymethyl methacrylate), vinyl chloride-based polymers, polyolefin-based polymers (such as polyethylene, polypropylene, polyolefin polymers having a cyclic or norbornene structure, and ethylene-propylene copolymers), polyamide-based polymers (such as nylon and aromatic polyamide polymers), polystyrene-based polymers (such as polystyrene and acrylonitrile-styrene copolymers), polyimide-based polymers, polysulfone-based polymers, polyethersulfone-based polymers, polyether ketone-based polymers, polyphenyl sulfide-based polymers, polyvinyl alcohol-based polymers, polyvinylidene chloride-based polymers, polyvinyl butyral-based polymers, polyarylate-based polymers, polyoxymethylene-based polymers, polyepoxy-based polymers, polymer blends thereof, etc.

### (Production method)

No particular limitation is imposed on the method for producing the active energy ray-curable surface printing ink composition of the invention, and any well-known method may be used.

For example, all the components described above are mixed using, for example, a bead mill or triple roll mill to prepare the ink composition.

The ink composition can also be prepared by mixing a pigment, a pigment dispersant, and various active energy ray-curable compounds to obtain a concentrated base in advance and then adding the monomers, the polymerization initiator, and optional additives such as a surfactant to the concentrated base such that the desired composition is obtained.

After the mixing of the components described above, the mixture is kneaded using, for example, a bead mill or triple roll mill to disperse the pigments (i.e., the coloring component and the extender). Then optional additives (additional additives such as a polymerization initiator, a polymerization inhibitor, and a wax) are added, and other components may be added to adjust the viscosity.

No particular limitation is imposed on the viscosity of the active energy ray-curable surface printing ink composition of the invention, and the viscosity is appropriately adjusted according to the intended application. The viscosity is, for example, 2000 mPa·s or less at 25°C and preferably 0.1 to 100 Pa·s at 25°C. In an offset method, the viscosity is preferably 20 to 50 Pa·s at 25°C.

### (Printing and application method)

To perform printing on the surface of a printing target base material using the active energy ray-curable surface printing ink composition of the invention, a well-known printing method and well-known curing conditions for the active energy ray-curable ink composition can be used. A colored active energy ray-curable surface printing ink composition is mainly used for the purpose of printing letters, figures, etc. When an active energy ray-curable surface printing ink composition that is not colored or is colored to such an extent that the ink does not exhibit hiding power is used for printing, the ink composition is used mainly as a clear ink composition.

For the surface printing method in this case, well-known means capable of printing an active energy ray-curable ink composition such as gravure printing, offset printing, flexographic printing, or inkjet printing can be used. When a clear ink is used, means capable of applying the ink over the entire surface such as a bar coater or roll coater may be used.

### EXAMPLES

The present invention will be described in detail by way of Examples, but the invention is not limited only to these Examples. "%" means "% by mass," and "parts" means "parts by mass," unless otherwise specified. Figures representing the amounts of materials in tables are based on "parts by mass." The unit of the acid value is mg KOH/g.

### (Active energy ray-curable surface printing ink compositions)

### <Pigments>

Indigo pigment: FASTOGEN Blue FDB13 (copper phthalocyanine pigment, DIC Corporation), white pigment: CR-80 (titanium oxide, treated with alumina and silica, ISHIHARA SANGYO KAISHA, LTD.)

### <Resins>

**[Table 1]**

| | Number of functional groups | Weight average molecular weight | Acid value (mg KOH/g) | Tg of cured product (°C) |
|---|---|---|---|---|
| Polyester acrylate 1 | 3 | 4500 | < 20 | 55 |
| Polyester acrylate 2 | 3 | 4500 | < 25 | 52 |
| Epoxy acrylate 1 | 2 | 2000 | < 1 | 30 |

### <Monomers>

M3130 (3 mole ethoxylated trimethylolpropane triacrylate, Miwon)
M3160 (6 mole ethoxylated trimethylolpropane triacrylate, Miwon)
M3190 (9 mole ethoxylated trimethylolpropane triacrylate, Miwon)
M3150 (15 mole ethoxylated trimethylolpropane triacrylate, Miwon)
SR415 (21 mole ethoxylated trimethylolpropane triacrylate, Sartomer)
ARONIXM-321 (6 mole propoxylated trimethylolpropane triacrylate, TOAGOSEI Co., Ltd.)
Other monomers are as shown in tables.

### <Additives>

Pigment dispersant: Solsperse 39000 (Lubrizol Japan Limited)
Polymerization inhibitor: tert-butylhydroquinone
Talc: Hifiller #5000PJ (Matsumura Sangyo Co., Ltd.)
Polydimethylsiloxane: Element 14^{™} PDMS 100 (viscosity at 25°C: 100 cSt, Momentive Performance Materials)

### (Preparation of active energy ray-curable printing ink compositions)

Components were mixed such that mixing compositions (% by mass) shown in Table 2 were obtained, and the mixtures were kneaded using triple roll mills to thereby obtain active energy ray-curable printing ink compositions in Examples and Comparative Examples.

### (Method for producing printed materials)

A simple drawdown machine (RI Tester: Houei Seikou, Co., Ltd.) was used to spread one of the compositions in the Examples and Comparative Examples uniformly over rubber and metal rolls of the RI tester, and the composition was transferred to the surface of a polyethylene film (product name "T.U.X HZR-2," thickness: 80 µm, Mitsui Chemicals Tohcello, Inc.) to produce a drawdown.

The drawdown with the printing ink applied thereto was irradiated with an electron beam using an electron beam irradiation device available from EYE ELECTRON BEAM Co., Ltd. at an acceleration voltage of 90 kV and an irradiation amount of 30 kGy in an atmosphere with an oxygen concentration of 200 ppm or less.

### (Method for producing bags)

The printed material was heat-sealed using an impulse sealer (manufactured by FUJIIMPULSE SEALER CO., LTD.) to produce bags with a size of 120 mm × 120 mm.

### (Method for producing retort bags)

After the production of the bags, the bags were filled with 40 g of tap water and sealed, and the resulting bags were immersed in pressurized hot water at 120°C under the condition of 30 minutes to perform retort processing.

### (Adhesion (printed materials before retort processing))

Immediately after curing, a peel test using a cellophane tape was performed on each of the printed materials obtained through the procedure described above, and the condition of the coating was evaluated according to the following criteria.

### (Adhesion (printed materials after retort processing))

A peel test using a cellophane tape was performed on each of the retort bags obtained through the procedure described above, and the condition of the coating was evaluated according to the following criteria.

Common criteria before and after retort processing
5: No delamination
4: The ratio of the delaminated area to the printed area is less than 25%
3: The ratio of the delaminated area to the printed area is 25% or more and less than 50%
2: The ratio of the delaminated area to the printed area is 50% or more and less than 75%
1: The ratio of the delaminated area to the printed area is 75% or more

### (Scratch resistance (printed materials before retort processing))

The printed surface of one of the printed materials obtained through the procedure described above was scratched with a nail, and the condition of the resulting printed surface was evaluated according to the following criteria.

### (Scratch resistance (printed materials after retort processing))

The printed surface of one of the retort bags obtained through the procedure described above was scratched with a nail, and the condition of the resulting printed surface was evaluated according to the following criteria.
∘: No scratches occurred
×: Scratches occurred

### (Delamination of ink or varnish)

The printed surface of each of the retort bags obtained through the procedure described above was visually observed and evaluated according to the following criteria.
∘: No delamination of the ink or varnish was found after the retort processing
×: Delamination of the ink or varnish was found after the retort processing

### (Heat resistance)

A heat sealing tester having a heating plate with a thermal gradient of 80 to 250°C was used to apply a pressure of 2.0 kg/cm² to an aluminum foil and the printed surface of one of the printed materials obtained through the procedure described above for 1 second. The lowest temperature at which the ink on the printed surface transferred to the aluminum foil was used to evaluate the heat resistance.
5: 200°C or higher
4: 150°C or higher and lower than 200°C
3: 100°C or higher and lower than 150°C
2: 80°C or higher and lower than 100°C
1: Lower than 80°C

### (Bending durability)

Each of the bags obtained through the procedure described above was fully folded and evaluated according to the following criteria.
∘: No cracking or delamination of the ink or varnish was found
×: At least one of cracking and delamination of the ink or varnish was found

**[Table 2]**

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Pigment | Indigo pigment | 25.0 | 25.0 | 25.0 | 25.0 | 25.0 | 25.0 | 25.0 | 25.0 | 25.0 | 25.0 | 25.0 | 25.0 | 25.0 |
| | White pigment | | | | | | | | | | | | | |
| Component (A) | M3160 | 22.0 | | | | | | | | | | | | |
| | M3190 | | 22.0 | | | | | | | | | | | 22.0 |
| | M3150 | | | 22.0 | | | | | | | | | | |
| | SR415 | | | | 22.0 | | | | | | | | | |
| | 9 Mole ethoxylated glycerin triacrylate | | | | | 22.0 | | | | | | | | |
| | 15 Mole ethoxylated glycerin triacrylate | | | | | | 22.0 | | | | | | | |
| | Polyethylene glycol 600 diacrylate | | | | | | | 22.0 | | | | | | |
| | Polyethylene glycol 400 diacrylate | | | | | | | | 22.0 | | | | | |
| | Polyethylene glycol 300 diacrylate | | | | | | | | | 22.0 | | | | |
| | 10 Mole ethoxylated bisphenol A diacrylate | | | | | | | | | | 22.0 | | | |
| | 20 Mole ethoxylated bisphenol A diacrylate | | | | | | | | | | | 22.0 | | |
| | 30 Mole ethoxylated bisphenol A diacrylate | | | | | | | | | | | | 22.0 | |
| Monomer other than component (A) | Trimethylolpropane triacrylate | | | | | | | | | | | | | |
| | M3130 | | | | | | | | | | | | | |
| | ARONIX M-321 | | | | | | | | | | | | | |
| | 9 Mole propoxylated trimethylolpropane triacrylate | | | | | | | | | | | | | |
| | 15 Mole propoxylated trimethylolpropane triacrylate | | | | | | | | | | | | | |
| | Polyethylene glycol 200 diacrylate | | | | | | | | | | | | | |
| Component (B) | Polydimethylsiloxane | 1.0 | 1.0 | 1.0 | 1.0 | 1.0 | 1.0 | 1.0 | 1.0 | 1.0 | 1.0 | 1.0 | 1.0 | 1.0 |
| Component (C) | Polyester acrylate 1 | 45.0 | 45.0 | 45.0 | 45.0 | 45.0 | 45.0 | 45.0 | 45.0 | 45.0 | 45.0 | 45.0 | 45.0 | |
| | Polyester acrylate 2 | | | | | | | | | | | | | 45.0 |
| | Epoxy acrylate 1 | | | | | | | | | | | | | |
| Additive | Pigment dispersant | 2.0 | 2.0 | 2.0 | 2.0 | 2.0 | 2.0 | 2.0 | 2.0 | 2.0 | 2.0 | 2.0 | 2.0 | 2.0 |
| | Polymerization inhibitor | 0.1 | 0.1 | 0.1 | 0.1 | 0.1 | 0.1 | 0.1 | 0.1 | 0.1 | 0.1 | 0.1 | 0.1 | 0.1 |
| | Talc | 5.0 | 5.0 | 5.0 | 5.0 | 5.0 | 5.0 | 5.0 | 5.0 | 5.0 | 5.0 | 5.0 | 5.0 | 5.0 |
| Total | | 100.1 | 100.1 | 100.1 | 100.1 | 100.1 | 100.1 | 100.1 | 100.1 | 100.1 | 100.1 | 100.1 | 100.1 | 100.1 |
| Evaluation | Adhesion (printed material) | 5 | 5 | 5 | 5 | 5 | 5 | 5 | 5 | 5 | 5 | 5 | 5 | 5 |
| | Scratch resistance (printed material) | ○ | ○ | ○ | ○ | ○ | ○ | ○ | ○ | ○ | ○ | ○ | ○ | ○ |
| | Adhesion (retort bag) | 5 | 5 | 5 | 5 | 5 | 5 | 5 | 5 | 5 | 5 | 5 | 5 | 5 |
| | Scratch resistance (retort bag) | ○ | ○ | ○ | ○ | ○ | ○ | ○ | ○ | ○ | ○ | ○ | ○ | ○ |
| | Delamination of ink or varnish | ○ | ○ | ○ | ○ | ○ | ○ | ○ | ○ | ○ | ○ | ○ | ○ | ○ |
| | Heat resistance | 5 | 5 | 5 | 5 | 5 | 5 | 5 | 5 | 5 | 5 | 5 | 5 | 5 |
| | Bending durability | ○ | ○ | ○ | ○ | ○ | ○ | ○ | ○ | ○ | ○ | ○ | ○ | ○ |

| | | Example | | | | | | | | | | | | |
|---|---|---|---|---|---|---|---|---|---|---|---|---|---|---|
| | | 14 | 15 | 16 | 17 | 18 | 19 | 20 | 21 | 22 | 23 | 24 | 25 | 26 |
| Pigment | Indigo pigment | 25.0 | 25.0 | 25.0 | 25.0 | 25.0 | 25.0 | 25.0 | 25.0 | 25.0 | 25.0 | 25.0 | 25.0 | 25.0 |
| | White pigment | | | | | | | | | | | | | |
| Component (A) | M3160 | | | | 10.0 | | | | | | | 42.0 | 12.0 | 12.0 |
| | M3190 | | | | | 10.0 | | | | | | | | |
| | M3150 | 22.0 | 21.0 | 20.0 | | | 10.0 | | | | | | | |
| | SR415 | | | | | | | 10.0 | | | | | 12.0 | |
| | 9 Mole ethoxylated glycerin triacrylate | | | | | | | | 10.0 | | | | | 12.0 |
| | 15 Mole ethoxylated glycerin triacrylate | | | | | | | | | 10.0 | 10.0 | | | |
| | Polyethylene glycol 600 diacrylate | | | | | | | | | | | | | |
| | Polyethylene glycol 400 diacrylate | | | | | | | | | | | | | |
| | Polyethylene glycol 300 diacrylate | | | | | | | | | | | | | |
| | 10 Mole ethoxylated bisphenol A diacrylate | | | | | | | | | | | | | |
| | 20 Mole ethoxylated bisphenol A diacrylate | | | | | | | | | | | | | |
| | 30 Mole ethoxylated bisphenol A diacrylate | | | | | | | | | | | | | |
| Monomer other than component (A) | Trimethylolpropane triacrylate | | | | 12.0 | 12.0 | | | | | | | | |
| | M3130 | | | | | | 12.0 | | | | | | | |
| | ARONIX M-321 | | | | | | | 12.0 | 12.0 | | | | | |
| | 9 Mole propoxylated trimethylolpropane triacrylate | | | | | | | | | 12.0 | | | | |
| | 15 Mole propoxylated trimethylolpropane triacrylate | | | | | | | | | | 12.0 | | | |
| | Polyethylene glycol 200 diacrylate | | | | | | | | | | | | | |
| Component (B) | Polydimethylsiloxane | 1.0 | 2.5 | 5.0 | 1.0 | 1.0 | 1.0 | 1.0 | 1.0 | 1.0 | 1.0 | 1.0 | 1.0 | 1.0 |
| Component (C) | Polyester acrylate 1 | | 45.0 | 43.0 | 45.0 | 45.0 | 45.0 | 45.0 | 45.0 | 45.0 | 45.0 | 25.0 | 45.0 | 45.0 |
| | Polyester acrylate 2 | | | | | | | | | | | | | |
| | Epoxy acrylate 1 | 45.0 | | | | | | | | | | | | |
| Additive | Pigment dispersant | 2.0 | 2.0 | 2.0 | 2.0 | 2.0 | 2.0 | 2.0 | 2.0 | 2.0 | 2.0 | 2.0 | 2.0 | 2.0 |
| | Polymerization inhibitor | 0.1 | 0.1 | 0.1 | 0.1 | 0.1 | 0.1 | 0.1 | 0.1 | 0.1 | 0.1 | 0.1 | 0.1 | 0.1 |
| | Talc | 5.0 | 5.0 | 5.0 | 5.0 | 5.0 | 5.0 | 5.0 | 5.0 | 5.0 | 5.0 | 5.0 | 5.0 | 5.0 |
| Total | | 100.1 | 100.6 | 100.1 | 100.1 | 100.1 | 100.1 | 100.1 | 100.1 | 100.1 | 100.1 | 100.1 | 102.1 | 102.1 |
| Evaluation | Adhesion (printed material) | 5 | 5 | 5 | 5 | 5 | 5 | 5 | 5 | 5 | 5 | 5 | 5 | 5 |
| | Scratch resistance (printed material) | ○ | ○ | ○ | ○ | ○ | ○ | ○ | ○ | ○ | ○ | ○ | ○ | ○ |
| | Adhesion (retort bag) | 5 | 5 | 5 | 5 | 5 | 5 | 5 | 5 | 5 | 5 | 5 | 5 | 5 |
| | .Scratch resistance (retort bag) | ○ | ○ | ○ | ○ | ○ | ○ | ○ | ○ | ○ | ○ | ○ | ○ | ○ |
| | Delamination of ink or varnish | ○ | ○ | ○ | ○ | ○ | ○ | ○ | ○ | ○ | ○ | ○ | ○ | ○ |
| | Heat resistance | 5 | 5 | 5 | 5 | 5 | 5 | 5 | 5 | 5 | 5 | 5 | 5 | 5 |
| | Bending durability | ○ | ○ | ○ | ○ | ○ | ○ | ○ | ○ | ○ | ○ | ○ | ○ | ○ |

| | | Example | | | | | | | | | | | Comparative Example | |
|---|---|---|---|---|---|---|---|---|---|---|---|---|---|---|
| | | 27 | 28 | 29 | 30 | 31 | 32 | 33 | 34 | 35 | 36 | 37 | 1 | 2 |
| Pigment | Indigo pigment | 25.0 | 25.0 | 25.0 | 25.0 | 25.0 | 25.0 | | | | | | 25.0 | 25.0 |
| | White pigment | | | | | | | 40.0 | 40.0 | 40.0 | | | | |
| Component (A) | M3160 | 12.0 | 12.0 | 12.0 | 12.0 | 2.0 | 2.0 | | | | 23.0 | 23.0 | | |
| | M3190 | | | | | 2.0 | 2.0 | | | | | | | |
| | M3150 | | | | | 2.0 | 2.0 | 12.0 | 5.0 | | | | | |
| | SR415 | | | | 6.0 | 2.0 | 2.0 | | | 12.0 | | | | |
| | 9 Mole ethoxylated glycerin triacrylate | | | | | 2.0 | 2.0 | | | | | | | |
| | 15 Mole ethoxylated glycerin triacrylate | 12.0 | | | | 2.0 | 2.0 | | | | | | | |
| | Polyethylene glycol 600 diacrylate | | 12.0 | | | 2.0 | 2.0 | | | | 20.0 | | | |
| | Polyethylene glycol 400 diacrylate | | | 6.0 | | 2.0 | 2.0 | | | | | 20.0 | | |
| | Polyethylene glycol 300 diacrylate | | | 6.0 | | 2.0 | 2.0 | | | | | | | |
| | 10 Mole ethoxylated bisphenol A diacrylate | | | | 6.0 | 2.0 | 2.0 | | | | | | | |
| | 20 Mole ethoxylated bisphenol A diacrylate | | | | | 2.0 | | | | | | | | |
| | 30 Mole ethoxylated bisphenol A diacrylate | | | | | 2.0 | | | | | | | | |
| Monomer other than component (A) | Trimethylolpropane triacrylate | | | | | | | | | | | | 22.0 | |
| | M3130 | | | | | | | | | | | | | 22.0 |
| | ARONIX M-321 | | | | | | 2.0 | | 5.0 | | | | | |
| | 9 Mole propoxylated trimethylolpropane triacrylate | | | | | | | | | | | | | |
| | 15 Mole propoxylated trimethylolpropane triacrylate | | | | | | | | | | | | | |
| | Polyethylene glycol 200 diacrylate | | | | | | 2.0 | | | | | | | |
| Component (B) | Polydimethylsiloxane | 1.0 | 1.0 | 1.0 | 1.0 | 1.0 | 1.0 | 1.0 | 1.0 | 1.0 | 1.0 | 1.0 | 1.0 | 1.0 |
| Component (C) | Polyester acrylate 1 | 45.0 | 45.0 | 45.0 | 45.0 | 45.0 | 45.0 | 40.0 | | | 50.0 | 50.0 | 45.0 | 45.0 |
| | Polyester acrylate 2 | | | | | | | | 40.0 | | | | | |
| | Epoxy acrylate 1 | | | | | | | | | 40.0 | | | | |
| Additive | Pigment dispersant | 2.0 | 2.0 | 2.0 | 2.0 | 2.0 | 2.0 | 2.0 | 2.0 | 2.0 | | | 2.0 | 2.0 |
| | Polymerization inhibitor | 0.1 | 0.1 | 0.1 | 0.1 | 0.1 | 0.1 | 0.1 | 0.1 | 0.1 | 0.1 | 0.1 | 0.1 | 0.1 |
| | Talc | 5.0 | 5.0 | 5.0 | 5.0 | 5.0 | 5.0 | 5.0 | 5.0 | 5.0 | 5.0 | 5.0 | 5.0 | 5.0 |
| Total | | 102.1 | 102.1 | 102.1 | 102.1 | 102.1 | 102.1 | 100.1 | 98.1 | 100.1 | 99.1 | 99.1 | 100.1 | 100.1 |
| Evaluation | Adhesion (printed material) | 5 | 5 | 5 | 5 | 5 | 5 | 5 | 5 | 5 | 5 | 5 | 1 | 1 |
| | Scratch resistance (printed material) | ○ | ○ | ○ | ○ | ○ | ○ | ○ | ○ | ○ | ○ | ○ | × | × |
| | Adhesion (retort bag) | 5 | 5 | 5 | 5 | 5 | 5 | 5 | 5 | 5 | 5 | 5 | 1 | 1 |
| | Scratch resistance (retort bag) | ○ | ○ | ○ | ○ | ○ | ○ | ○ | ○ | ○ | ○ | ○ | × | × |
| | Delamination of ink or varnish | ○ | ○ | ○ | ○ | ○ | ○ | ○ | ○ | ○ | ○ | ○ | × | × |
| | Heat resistance | 5 | 5 | 5 | 5 | 5 | 5 | 5 | 5 | 5 | 5 | 5 | 3 | 3 |
| | Bending durability | ○ | ○ | ○ | ○ | ○ | ○ | ○ | ○ | ○ | ○ | ○ | × | × |

| | | Comparative Example | | | | | | | | | | | | | |
|---|---|---|---|---|---|---|---|---|---|---|---|---|---|---|---|
| | | 3 | 4 | 5 | 6 | 7 | 8 | 9 | 10 | 11 | 12 | 13 | 14 | 15 | 16 |
| Pigment | Indigo pigment | 25.0 | 25.0 | 25.0 | 25.0 | 25.0 | 25.0 | 25.0 | 25.0 | 25.0 | 25.0 | 25.0 | 25.0 | 25.0 | 25.0 |
| | White pigment | | | | | | | | | | | | | | |
| Component (A) | M3160 | | | | | | | | | | | | 23.0 | 23.0 | 4.0 |
| | M3190 | | | | 4.0 | | | | | 4.0 | | | | | |
| | M3150 | | | | | 4.0 | | | | | 4.0 | | | | |
| | SR415 | | | | | | 4.0 | | | | | 4.0 | | | |
| | 9 Mole ethoxylated glycerin triacrylate | | | | | | | 4.0 | | | | | | | |
| | 15 Mole ethoxylated glycerin triacrylate | | | | | | | | 4.0 | | | | | | |
| | Polyethylene glycol 600 diacrylate | | | | | | | | | | | | | | |
| | Polyethylene glycol 400 diacrylate | | | | | | | | | | | | | | |
| | Polyethylene glycol 300 diacrylate | | | | | | | | | | | | | | |
| | 10 Mole ethoxylated bisphenol A diacrylate | | | | | | | | | | | | | | |
| | 20 Mole ethoxylated bisphenol A diacrylate | | | | | | | | | | | | | | |
| | 30 Mole ethoxylated bisphenol A diacrylate | | | | | | | | | | | | | | |
| Monomer other than component (A) | Trimethylolpropane triacrylate | | | | 18.0 | 18.0 | 18.0 | 18.0 | 18.0 | | | | | | |
| | M3130 | | | | | | | | | 18.0 | | | | | |
| | ARONIX M-321 | 22.0 | | | | | | | | | 18.0 | | | | |
| | 9 Mole propoxylated trimethylolpropane triacrylate | | 22.0 | | | | | | | | | 18.0 | | | |
| | 15 Mole propoxylated trimethylolpropane triacrylate | | | 22.0 | | | | | | | | | | | 18.0 |
| | Polyethylene glycol 200 diacrylate | | | | | | | | | | | | | | |
| Component (B) | Polydimethylsiloxane | 1.0 | 1.0 | 1.0 | 1.0 | 1.0 | 1.0 | 1.0 | 1.0 | 1.0 | 1.0 | 1.0 | 0.0 | 0.1 | 1.0 |
| Component (C) | Polyester acrylate 1 | 45.0 | 45.0 | 45.0 | 45.0 | 45.0 | 45.0 | 45.0 | 45.0 | 45.0 | 45.0 | 45.0 | 45.0 | 45.0 | 45.0 |
| | Polyester acrylate 2 | | | | | | | | | | | | | | |
| | Epoxy acrylate 1 | | | | | | | | | | | | | | |
| Additive | Pigment dispersant | 2.0 | 2.0 | 2.0 | 2.0 | 2.0 | 2.0 | 2.0 | 2.0 | 2.0 | 2.0 | 2.0 | 2.0 | 2.0 | 2.0 |
| | Polymerization inhibitor | 0.1 | 0.1 | 0.1 | 0.1 | 0.1 | 0.1 | 0.1 | 0.1 | 0.1 | 0.1 | 0.1 | 0.1 | 0.1 | 0.1 |
| | Talc | 5.0 | 5.0 | 5.0 | 5.0 | 5.0 | 5.0 | 5.0 | 5.0 | 5.0 | 5.0 | 5.0 | 5.0 | 5.0 | 5.0 |
| Total | | 100.1 | 100.1 | 100.1 | 100.1 | 100.1 | 100.1 | 100.1 | 100.1 | 100.1 | 100.1 | 100.1 | 100.1 | 100.2 | 100.1 |
| Evaluation | Adhesion (printed material) | 1 | 1 | 1 | 1 | 1 | 1 | 1 | 1 | 1 | 1 | 1 | 1 | 1 | 1 |
| | Scratch resistance (printed material) | × | × | × | × | × | × | × | × | × | × | × | × | × | × |
| | Adhesion (retort bag) | 1 | 1 | 1 | 1 | 1 | 1 | 1 | 1 | 1 | 1 | 1 | 3 | 3 | 1 |
| | Scratch resistance (retort bag) | × | × | × | × | × | × | × | × | × | × | × | × | × | × |
| | Delamination of ink or varnish | × | × | × | × | × | × | × | × | × | × | × | × | × | × |
| | Heat resistance | 3 | 3 | 3 | 3 | 3 | 3 | 3 | 3 | 3 | 3 | 3 | 3 | 3 | 3 |
| | Bending durability | × | × | × | × | × | × | × | × | × | × | × | × | × | × |

In Examples 1 to 37 of the ink composition of the invention, the adhesion and scratch resistance were sufficiently good both in the printed portions before the retort processing and in the printed portions of the retort bags after the retort processing. The inks or varnishes did not delaminate from the printed surfaces of the retort bags, and the inks on the printed surfaces did not transfer to other surfaces due to high-temperature heating during heat sealing. Moreover, the bending durability of the bags obtained in the manner described above was good.

However, in Comparative Examples 1 to 5, the component (A) is not contained, and the condition 1 is not satisfied. In Comparative Examples 6 to 13 and Comparative Example 16, the condition 1 is not satisfied. In Comparative Example 14, the component (B) is not contained. In Comparative Example 15, the content of the component (B) is small. In these Comparative Examples, all the evaluation results were poor.

## Claims

1. An active energy ray-curable surface printing ink composition comprising the following component (A), component (B), and component (C) and
satisfying the following condition (1) and condition (2) :
component (A) an ethoxylated polyfunctional monomer with an addition number of moles of ethylene oxide of 6 to 60;
component (B) a compound having an unmodified polydimethylsiloxane skeleton;
component (C) an active energy ray-curable oligomer and/or an active energy ray-curable polymer;
condition (1) a content of a monomer other than the component (A) in the active energy ray-curable surface printing ink composition is 15.0% by mass or less; and
condition (2) a content of the component (B) in the active energy ray-curable surface printing ink composition is 0.2% by mass or more and 10.0% by mass or less.

2. The active energy ray-curable surface printing ink composition according to claim 1, wherein the component (B) does not have a hydroxy group, an amino group, a (poly)ether group, an epoxy group, a carboxy group, a carbinol group, a mercapto group, a phenol group, an ester group, an alkoxy group, a halogenated aralkyl group, an aralkyl group, a long-chain alkyl group, higher fatty acid ester modified, and a higher aliphatic amido group.

3. The active energy ray-curable surface printing ink composition according to claim 1 or 2, wherein the component (B) has a viscosity of 20 to 2000 cSt.

4. The active energy ray-curable surface printing ink composition according to claim 1 or 2, further comprising a pigment and a pigment dispersant.
